# EUROPEAN PATENT SPECIFICATION

(11) **EP 1 133 412 B1**
(45) Date of publication and mention of the grant of the patent: **24.07.2002**
(21) Application number: 99972986.6
(22) Date of filing: 19.11.1999
(51) Int. Cl.: B60R 19/18

(54) **A MOTOR VEHICLE BUMPER MOUNTING ASSEMBLY**
STOSSFÄNGER- BEFESTIGUNGSVORRICHTUNG FÜR KRAFTFAHRZEUGE
ENSEMBLE DE MONTAGE DE PARE-CHOCS D'AUTOMOBILE

(30) Priority: 27.11.1998 GB 9825882
(43) Date of publication of application: 19.09.2001
(73) Proprietor: Bayerische Motoren Werke Aktiengesellschaft, 80788 München (DE)
(72) Inventor: GREEN, Martin, Christopher, Coventry CV3 2GR (GB)
(86) International application number: GB9903835
(87) International publication number: WO0032444

(56) References cited:
- DE-A- 4 119 639
- FR-A- 2 744 407
- US-A- 4 961 603
- PATENT ABSTRACTS OF JAPAN vol. 1997, no. 06, 30 June 1997 (1997-06-30) & JP 09 039695 A (NISSAN MOTOR CO LTD), 10 February 1997 (1997-02-10)

## Description

The present invention relates to an improved motor vehicle bumper mounting assembly.

A motor vehicle bumper assembly is typically formed as an external shell extending across a front or rear end of the motor vehicle. The shell is attached to a motor vehicle body, and conveniently to a cross beam formed as part thereof. The cross beam itself is typically connected to longitudinal beams forming part of a chassis of the motor vehicle. The mounting assembly in this way transfers an impact load away from an impact point to main load bearing members of the motor vehicle.

Problems arise due to the fact that the cross beam is typically curved across an end of the motor vehicle to suit the surface of the motor vehicle bumper. In most circumstances, the performance of this bumper mounting assembly is satisfactory. However, in certain situations a higher bumper performance is required. In particular if the height of the cross beam is not the same as that of the load bearing members in the motor vehicle body, twisting of the cross beam can occur. This can lead to further damage to the motor vehicle.

From JP 09039695 A a bumper mounting assembly according to the preamble of claim 1 is known, which has first and second longitudinally extending load bearing members, a tie bar extending between the first and second longitudinally extending members and a curved armature, wherein the tie bar and the curved armature are connected to the longitudinally extending members by way of a bracket assembly.

A known bumper system having certain advantages is known from US 4 961 603. This bumper system includes a bumper member extending between the longitudinal load bearing beams. A tension means extends between the longitudinal beams to prevent the application of outwardly directed lateral forces to the longitudinal beams. The bumper member and the tension means are directly and pivotally connected to one another through the longitudinal beams.

It is an object of the invention to improve these prior art bumpers, especially with regard to their resistance against twisting forces.

According to the present invention a motor vehicle bumper assembly for a vehicle, said vehicle including first and second longitudinally extending load bearing members, is disclosed in which the bumper assembly comprises a straight tie bar having a first end and a second end, the tie bar extending between the first and second longitudinally extending members, and a curved armature having a first end and a second end, the respective first and second ends of the tie bar and the armature being linked together the tie bar and the curved armature being connected to the first and second longitudinally extending members by way of a bracket assembly, characterised in that the tie bar is of generally "C" shaped configuration.

It is an advantage of the present invention that it resists the twisting forces induced on impact noted above, and also lateral forces that are generated as the curved cross beam is flattened during impact.

Preferably, the bracket assembly comprises first and second brackets, each bracket comprising an upstanding portion, an outwardly directed first flange portion at one end thereof and a second flange extending substantially parallel to the first flange, the second flange extending from the upstanding portion, such that in use, the ends of the tie bar are located between the first and second flanges.

Preferably, the ends of the armature are linked to the respective ends of the tie bar between the first and second flanges of the brackets.

Preferably, the motor vehicle bumper mounting assembly further comprises at least one mounting strut extending between the tie bar and the armature.

Preferably, the motor vehicle bumper mounting assembly further comprises a crush element between the tie bar and the armature. Alternatively, a crush element is included in the at least one mounting strut.

The invention will now be described, by way of example only, with reference to the accompanying drawings, in which:
Figure 1 shows a perspective view of a motor vehicle bumper mounting assembly in accordance with the present invention;
Figure 2 illustrates in diagrammatic form the forces acting on a motor vehicle bumper mounting assembly;
Figure 3 shows an end view in the direction of arrow A of the assembly of Figure 1; and
Figure 4 shows a section along line III-III of Figure 1.

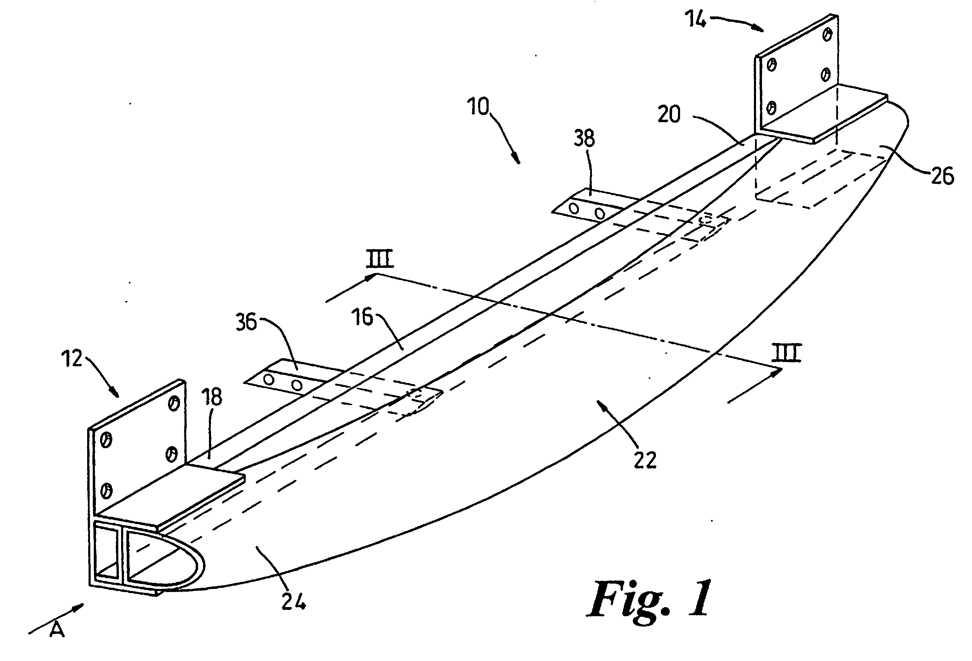

Referring to the Figures 1, 3 and 4 there is shown a motor vehicle bumper mounting assembly 10 in accordance with the present invention. A motor vehicle bumper is typically formed as an external shell (not shown) extending across an end, for example a front, of a motor vehicle.

A first bracket 12 and a second bracket 14 are shown laterally aligned. The brackets are adapted to be mounted on respective longitudinally extending load bearing beams, hereafter the longitudinals, of the motor vehicle chassis by any suitable means. A straight tie bar 16 having a first end 18 and a second end 20 extends between the first and second brackets. A curved armature 22 is provided having a first end 24 and a second end 26. The respective first and second ends of the tie bar and the armature are linked together. The respective ends may be linked directly to one another or by way of the first and second brackets.

The tie bar 16 is of generally "C" shaped configuration. The use of the "C" section ensures that a box section 28 is generated at the first and second brackets. The box section resists the twisting forces induced in the tie bar caused by the tie bar being offset from the motor vehicle longitudinals.

Each of the first and second brackets 12,14 comprises an upstanding portion 30, an outwardly directed first flange 32 at one end thereof and a second flange 34 extending substantially parallel to the first flange. The second flange extends from the upstanding portion, such that in use, the ends of the tie bar fit between the first and second flanges. The ends of the armature 22 are linked to the respective ends of the tie bar 16 between the first and second flanges of the first and second brackets 12,14.

In the embodiment illustrated the motor vehicle bumper mounting assembly further comprises a first mounting strut 36 and a second mounting strut 38. Each mounting strut extends between the tie bar 16 and the armature 22. The motor vehicle bumper mounting strut may further comprise a crush element (not shown) located within the strut, thereby further increasing energy absorption. Alternatively, or additionally, at least one crush element or at least one further crush element may be located between the tie bar 16 and the armature 22.

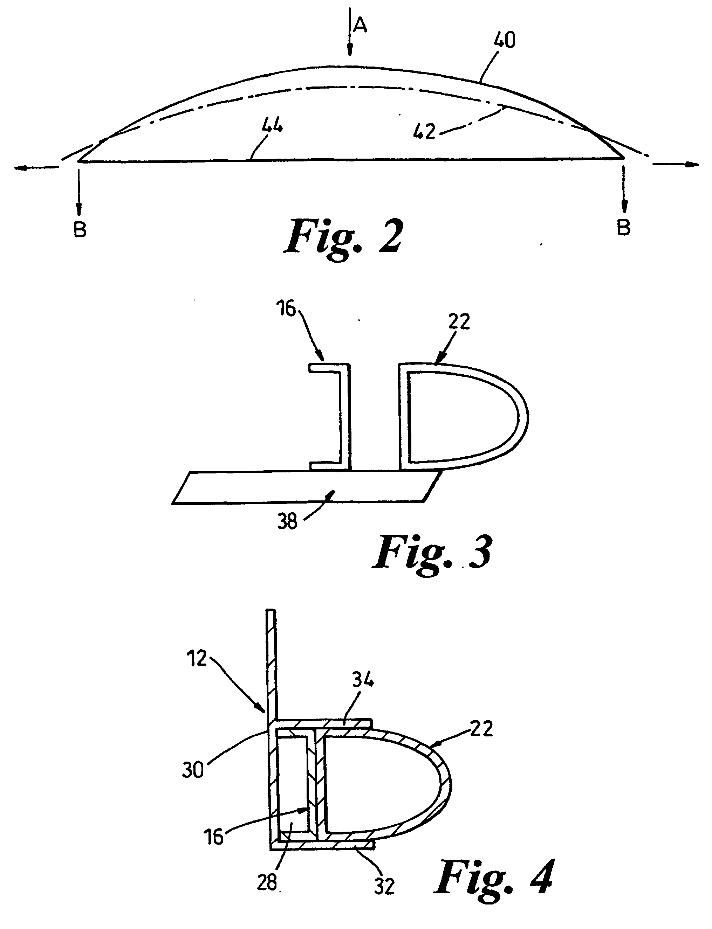

The operation of the mounting assembly will now be described with reference also to Figure 2. Under impact (arrow A), the curved armature (line 40) is applying a load placing the armature in compression. The armature tries to straighten to the position shown in ghost (line 42). The tie bar (line 44) however is then placed in tension resisting the movement of the armature. The applied loads are then directed towards the load bearing members of the motor vehicle (arrows B). This acts to strengthen the armature and reducing any deflection which may result. This allows a lighter structure to be used for the bumper than has been used previously, as well as an increased bumper performance in the space provided.

## Claims

1. A motor vehicle bumper mounting assembly (10) for a vehicle, said vehicle including first and second longitudinally extending load bearing members (36, 38), the bumper assembly comprising a straight tie bar (16) having a first and a second end (18, 20), the tie bar (16) extending between the first and second longitudinally extending members, and a curved armature (22) having a first end and a second end (24, 26), the respective first and second ends (18, 20) of tie bar (16) and the curved armature (22) being linked together, the tie bar (16) and the curved armature (22) being connected to the first and second longitudinally extending members by way of a bracket assembly (12, 14), **characterised in that** the tie bar (16) is of generally "C" shaped configuration.

2. A bumper mounting assembly according to claim 1 **characterised in that** the bracket assembly comprises first and second brackets (12, 14), each bracket comprising an upstanding portion (30), an outwardly directed first flange portion (32) at one end thereof and a second flange (34) extending substantially parallel to the first flange (32), the second flange (34) extending from the upstanding portion (30), such that in use, the ends (18, 20) of the tie bar (16) are located between the first and second flanges (32, 34).

3. A bumper mounting assembly according to claim 2, **characterised in that** the ends (24, 26) of the armature (22) are linked to the respective ends (18, 20) of the tie bar (16) between the first and second flanges (32, 34) of the first and second brackets (12, 14).

4. A bumper mounting assembly according to any previous claim, **characterised in that** the tie bar (16) is offset from the first and second longitudinally extending members.

5. A bumper mounting assembly according to any previous claim, **characterised in that** the assembly (10) further comprises at least one mounting strut (36, 38) extending between the tie bar (16) and the armature (22).

6. A bumper mounting assembly according to claim 5, **characterised in that** a crush element is located within the at least one mounting strut (36, 38).

7. A bumper mounting assembly according to any previous claim, **characterised in that** the bumper assembly (10) further comprises at least one crush element or at least one further crush element located between the tie bar (16) and the armature (22).

## Patentansprüche

1. Kraftfahrzeug-Stoßfängerbefestigungsanordnung (10) für ein Fahrzeug, das ein erstes und ein zweites, sich in Längsrichtung erstreckendes lasttragendes Glied (36, 38) enthält, wobei die Stoßfängeranordnung eine gerade Zugstange (16) mit einem ersten Ende und einem zweiten Ende (18, 20), die sich zwischen dem ersten und dem zweiten, sich in Längsrichtung erstreckenden Glied erstreckt, und eine gekrümmte Halterung (22) mit einem ersten Ende und einem zweiten Ende (24, 26) aufweist, wobei das jeweilige erste und zweite Ende (18, 20) der Zugstange (16) und der gekrümmten Halterung (22) miteinander verbunden sind und die Zugstange (16) und die gekrümmte Halterung (22) über eine Halteranordnung (12, 14) mit dem ersten und dem zweiten sich in Längsrichtung erstreckenden Glied verbunden sind, **dadurch gekennzeichnet, daß** die Zugstange (16) eine allgemein "C"-förmige Konfiguration aufweist.

2. Stoßfängerbefestigungsanordnung nach Anspruch 1, **dadurch gekennzeichnet, daß** die Halteranordnung einen ersten und einen zweiten Halter (12, 14) umfaßt, wobei jeder Halter einen aufrechtstehenden Teil (30), einen nach außen gerichteten ersten Flanschteil (32) an einem Ende davon und einen zweiten Flansch (34), der sich im wesentlichen parallel zum ersten Flansch (32) erstreckt, umfaßt, wobei sich der zweite Flansch (34) so von dem aufrechtstehenden Teil (30) erstreckt, daß sich die Enden (18, 20) der Zugstange (16) im Gebrauch zwischen dem ersten und dem zweiten Flansch (32, 34) befinden.

3. Stoßfängerbefestigungsanordnung nach Anspruch 2, **dadurch gekennzeichnet, daß** die Enden (24, 26) der Halterung (22) mit den jeweiligen Enden (18, 20) der Zugstange (16) zwischen dem ersten und dem zweiten Flansch (32, 34) des ersten und des zweiten Halters (12, 14) verbunden sind.

4. Stoßfängerbefestigungsanordnung nach einem der vorhergehenden Ansprüche, **dadurch gekennzeichnet, daß** die Zugstange (16) von dem ersten und dem zweiten, sich in Längsrichtung erstreckenden Glied versetzt ist.

5. Stoßfängerbefestigungsanordnung nach einem der vorhergehenden Ansprüche, **dadurch gekennzeichnet, daß** die Anordnung (10) weiterhin mindestens eine Befestigungsstrebe (36, 38) umfaßt, die sich zwischen der Zugstange (16) und der Halterung (22) erstreckt.

6. Stoßfängerbefestigungsanordnung nach Anspruch 5, **dadurch gekennzeichnet, daß** sich ein Knautschelement in der mindestens einen Befestigungsstrebe (36, 38) befindet.

7. Stoßfängerbefestigungsanordnung nach einem der vorhergehenden Ansprüche, **dadurch gekennzeichnet, daß** die Stoßfängeranordnung (10) weiterhin mindestens ein Knautschelement oder mindestens ein weiteres Knautschelement umfaßt, das sich zwischen der Zugstange (16) und der Halterung (22) befindet.

## Revendications

1. Ensemble de montage de pare-chocs de véhicule automobile (10), le véhicule ayant un premier et un second élément de support de charge s'étendant longitudinalement (36, 38), l'ensemble de pare-chocs se composant d'une barre de liaison (16), droite, ayant une première et une seconde extrémité (18, 20), la barre de liaison (16) s'étendant entre le premier et le second élément longitudinal, ainsi qu'une armature courbe (22) avec une première et une seconde extrémité (24, 26), la première et la seconde extrémité (18, 20) de la barre de liaison (16) et l'armature courbe (22) étant reliées, la barre de liaison (16) et l'armature courbe (22) étant reliées au premier et au second élément longitudinal par l'intermédiaire d'un ensemble à console (12, 14),
**caractérisé en ce que**
la barre de liaison (16) a une section générale en forme de grand C.

2. Ensemble de montage de pare-chocs selon la revendication 1,
**caractérisé en ce que**
l'ensemble de console se compose d'une première et d'une second console (12, 14), chaque console ayant une partie relevée (30), une première bride (32) dirigée vers l'extérieur à une extrémité et une seconde bride (34) s'étendant sensiblement parallèlement à la première bride (32), la seconde bride (34) partant de la partie relevée (30) de façon que les extrémités (18, 20) de la barre de liaison (16) se placent entre la première et la seconde bride (32, 34).

3. Ensemble de montage de pare-chocs selon la revendication 2,
**caractérisé en ce que**
les extrémités (24, 26) de l'armature (22) sont reliées aux extrémités respectives (18, 20) de la barre de liaison (16) entre la première et la seconde bride (32, 34) de la première et de la seconde console (12, 14).

4. Ensemble de montage de pare-chocs selon l'une quelconque des revendications précédentes,
**caractérisé en ce que**
la barre de liaison (16) est décalée par rapport aux premier et second éléments longitudinaux.

5. Ensemble de montage de pare-chocs selon l'une quelconque des revendications précédentes,
**caractérisé en ce que**
l'ensemble (10) comporte en outre au moins une broche de montage (36, 38) s'étendant entre la barre de liaison (16) et l'armature 22).

6. Ensemble de montage de pare-chocs selon la revendication 5,
**caractérisé en ce que**
un élément d'écrasement est placé dans au moins une broche de montage (36, 38).

7. Ensemble de montage de pare-chocs selon l'une quelconque des revendications précédentes,
**caractérisé en ce que**
l'ensemble de pare-chocs (10) se compose d'au moins un élément d'écrasement ou d'au moins un autre élément d'écrasement placé entre la barre de liaison (16) et l'armature (22).
